# EUROPEAN PATENT APPLICATION

(11) **EP 4 450 324 A1**
(43) Date of publication of application: **23.10.2024**
(21) Application number: 22907422.4
(22) Date of filing: 12.12.2022
(51) Int. Cl.: B60L 58/25, B60L 9/18, B60L 58/26

(54) **FLOW RATE CONTROL METHOD, FLOW RATE CONTROL DEVICE, AND COOLING SYSTEM**

(30) Priority: 17.12.2021 JP 2021205477
(71) Applicant: NISSAN MOTOR CO., LTD., Kanagawa 221-0023 (JP)
(72) Inventor: NAGAI, Hiroyuki, Atsugi-shi, Kanagawa 243-0123 (JP); SASAKI, Kensuke, Atsugi-shi, Kanagawa 243-0123 (JP)
(74) Representative: Grünecker Patent- und Rechtsanwälte PartG mbB
(86) International application number: PCT/JP2022/045700
(87) International publication number: WO 2023/112898

(57) **Abstract**

In a vehicle on which a motor that drives the vehicle, a battery that allows supplying an electric power to the motor, and a power conversion device disposed between the motor and the battery are mounted, an execution command of ripple charging and discharging that alternately charges and discharges for multiple times with the battery is output to the power conversion device when a temperature of the battery is lower than a predetermined threshold temperature, and the flow rate of the heating medium is controlled such that the flow rate of the heating medium is reduced compared with a case where the temperature of the battery is lower than the temperature of the heating medium when the temperature of the battery is higher than the temperature of the heating medium that exchanges heat with the battery while the ripple charging and discharging is executed.

## Description

### Technical Field

The present invention relates to a flow rate control method, a flow rate control device, and a cooling system for controlling a flow rate of a heating medium.

The present application claims priority based on Japanese Patent Application No. 2021-205477 filed on December 17, 2021, and, for the designated countries where incorporation by reference of literature is permitted, the content described in the above-described application is incorporated herein by reference and becomes a part of the description herein.

### Background Art

There has conventionally known a battery system that is mounted on a vehicle and warms up a battery that is to be charged and discharged (Patent Document 1). This battery system includes a battery pack, charge/discharge means, heat exchanging means, transfer means, and a control device. The battery pack is configured by energizably connecting a plurality of battery cells. The charge/discharge means is connected to the battery pack in a wired manner, and executes ripple charging and discharging that alternately charges and discharges for multiple times in one second with the battery pack. The heat exchanging means is provided such that the heat generated from the charge/discharge means and a heat transfer medium exchange heat. The transfer means transfers the heat transfer medium toward the battery pack. The control device controls respective operations of the charge/discharge means and the transfer means. When the battery pack has been determined to be not allowed to produce a required output power because of its low temperature, the control device controls the operation of the charge/discharge means such that the ripple charging and discharging is executed, and further controls the operation of the transfer means such that the heat transfer medium, which receives the heat generated from the charge/discharge means, is transferred to the battery pack.

### Prior Art Document

### Patent Document

Patent Document 1: Japanese Unexamined Patent Application Publication No. 2010-257722

### Summary of Invention

### Problems to be solved by Invention

The prior art has a problem that efficient temperature rise in a battery is difficult because the heat generated in the battery is emitted outside by heat exchange between the battery and the heat transfer medium while ripple charging and discharging is executed.

The present invention aims to achieve an object to provide a flow rate control method, a flow rate control device, and a cooling system that allow efficiently raising a temperature of a battery by ripple charging and discharging.

### Means for solving problems

The present invention, in a vehicle on which a motor that drives the vehicle, a battery that allows supplying an electric power to the motor, and a power conversion device disposed between the motor and the battery are mounted, outputs an execution command of ripple charging and discharging that alternately charges and discharges for multiple times with the battery to the power conversion device when a temperature of the battery is lower than a predetermined threshold temperature, and controls the flow rate of the heating medium such that the flow rate of the heating medium is reduced compared with a case where the temperature of the battery is lower than the temperature of the heating medium when the temperature of the battery is higher than the temperature of the heating medium that exchanges heat with the battery while the ripple charging and discharging is executed, which solves the above-described problem.

### Effects of Invention

The present invention allows efficiently raising the temperature of the battery by ripple charging and discharging.

### Brief Description of Drawings

FIG. 1 is a configuration schematic diagram of a cooling system according to a first embodiment.
FIG. 2 is an exemplary timing chart for describing a flow rate control method of a cooling water.
FIG. 3A is a drawing illustrating a state where the cooling water does not flow to a driving battery in the cooling system illustrated in FIG. 1.
FIG. 3B is a drawing illustrating a state where the cooling water flows to the driving battery in the cooling system illustrated in FIG. 1.
FIG. 4 is an exemplary flowchart illustrating a flow rate control method of the cooling water according to the first embodiment.
FIG. 5 is a configuration schematic diagram of a cooling system according to a second embodiment.
FIG. 6A is a drawing illustrating a state where the cooling water does not flow to the driving battery in a situation where the driving battery is charged by a normal charging method in the cooling system illustrated in FIG. 5.
FIG. 6B is a drawing illustrating a state where the cooling water does not flow to the driving battery in a situation where the driving battery is not charged from a power feeding facility in the cooling system illustrated in FIG. 5.
FIG. 7A is a drawing illustrating a state where the cooling water flows to the driving battery in a situation where the driving battery is charged by a normal charging method in the cooling system illustrated in FIG. 5.
FIG. 7B is a drawing illustrating a state where the cooling water flows to the driving battery in a situation where the driving battery is not charged from the power feeding facility in the cooling system illustrated in FIG. 5.

### Modes for Carrying out the Invention

The following describes embodiments of a flow rate control method and a flow rate control device according to the present invention based on the drawings.

### First Embodiment

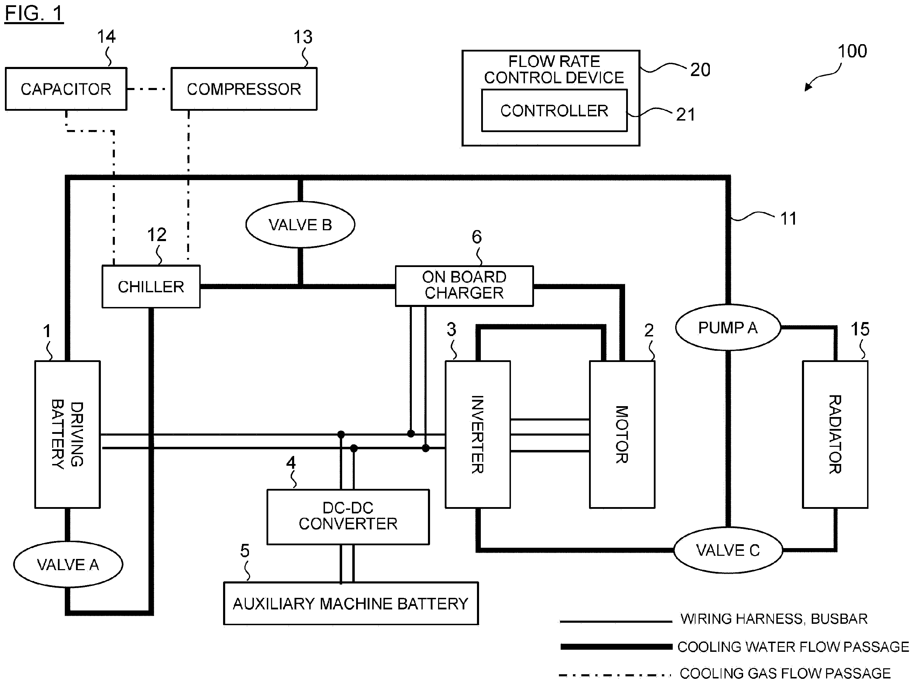

FIG. 1 is a configuration schematic diagram of a cooling system 100 according to a first embodiment. The cooling system 100 according to the embodiment is a system that is mounted on an electric-powered vehicle, and is for cooling a driving battery 1, a motor 2, an inverter 3, and an on board charger 6, which are described later. In the embodiment, the description is made by using what is called an electric vehicle (EV) that does not include an internal combustion engine, such as a gasoline engine or a diesel engine, but includes the driving battery 1, the inverter 3 that converts an electric power of the driving battery 1, and the motor 2 that generates a driving power that drives the electric-powered vehicle by the electric power output from the inverter 3 as an example for the electric-powered vehicle.

As illustrated in FIG. 1, the cooling system 100 includes the driving battery 1, the motor 2, the inverter 3, a DC-DC converter 4, an auxiliary machine battery 5, and the on board charger 6 electrically connected by a wiring harness or a busbar. Specifically, the inverter 3 is disposed between the driving battery 1 and the motor 2, and the DC-DC converter 4 and the on board charger 6 are connected to a wiring harness that connects between the driving battery 1 and the inverter 3. The auxiliary machine battery 5 is connected to the DC-DC converter 4. The cooling system 100 includes a flow rate control device 20 that includes a controller 21. The flow rate control device 20 will be described later.

The cooling system 100 is provided with a cooling water flow passage 11 as a passage for cooling water. In the embodiment, the cooling water is described as an example of a heating medium that exchanges heat among the driving battery 1, the inverter 3, the motor 2, and the on board charger 6. As illustrated in FIG. 1, the cooling water flow passage 11 is provided with a chiller 12, a radiator 15, a valve A to valve C, and a pump A. So as to be able to cool the driving battery 1, the inverter 3, the motor 2, and the on board charger 6 as cooling targets, the cooling water flow passage 11 is provided near the respective configurations. In the embodiment, the positioning method or the installation method of the cooling water flow passage 11 is not specifically limited, but the cooling water flow passage 11 is provided for the cooling targets by an installation method or a positioning method known as of the filing of the present application. The cooling water flow passage 11 is configured such that the cooling water is allowed to circulate by open/close control of a valve by the flow rate control device 20 described later.

Next, of the configurations included in the cooling system 100, a configuration electrically connected by a wiring harness or a busbar will be described.

The driving battery 1 is configured to be able to supply an electric power to the motor 2 that is a traveling driving source of the electric vehicle. For the driving battery 1, for example, a battery pack configured of a nickel-metal hydride secondary battery, a lithium secondary battery, or the like is used. The battery pack is a collective body of a plurality of battery cells connected in series, and has a predetermined internal resistance. To the driving battery 1, a ripple current is input from the inverter 3. The ripple current is a current having a charge and discharge pattern alternately repeating charging and discharging in a pulse shape. Once the ripple current is input to the driving battery 1, charging and discharging corresponding to the ripple current is alternately repeated, and the current by the charging and discharging flows to an internal resistance. This causes the internal resistance to heat up to generate heat inside the driving battery 1. The driving battery 1 is disposed with a temperature sensor (not illustrated) for detecting a temperature of the driving battery 1. The temperature of the driving battery 1 detected by the temperature sensor is output to the flow rate control device 20. The driving battery 1 corresponds to an exemplary battery of the present invention.

The motor 2 is a driving motor that generates a torque for driving driving wheels of the electric vehicle. The motor 2 generates a driving power by an AC power supplied from the inverter 3, and the generated driving power is transferred to the driving wheels via a reduction gear, which is not illustrated. When the electric vehicle is decelerated, during coast driving, or in a similar situation, the motor 2 rotates as a regenerative driving power is transmitted to the motor 2 from the driving wheels. The rotation of the motor 2 outputs an AC power from the motor 2 to the inverter 3. For the motor 2, for example, a three-phase AC motor is used. The motor 2 corresponds to an exemplary motor of the present invention.

The inverter 3 is a power conversion device that converts a DC power input from the driving battery 1 into an AC power, and outputs the converted AC power to the motor 2. As described above, when an AC power is output from the motor 2 to the inverter 3, the inverter 3 also functions as a power conversion device that converts an AC power from the motor 2 into a DC power, and outputs the converted DC power to the driving battery 1. The inverter 3 is electrically connected to the flow rate control device 20, and operates corresponding to a control signal from the controller 21.

When the motor 2 is configured of a three-phase AC motor, the inverter 3 is configured of circuits connected to switching elements, such as IGBTs, in a bridged manner, and the circuits allow two-phase to three-phase conversion. The inverter 3 is configured of three pairs of series circuits (also referred to as three pairs of arm circuits) to which two switching elements are connected in series. The three pairs of series circuits are connected to the driving battery 1 in parallel. In the inverter 3, respective connection points between switching elements of upper arms and switching elements of lower arms are connected to output terminals of respective phases (U-phase, V-phase, and W-phase) on the motor 2 side. The inverter 3 has a smoothing capacitor (not illustrated). The smoothing capacitor is a capacitor for making an input/output voltage of the driving battery 1 smooth. The smoothing capacitor is connected between the three pairs of series circuits and the connecting terminals of the driving battery 1. Note that an electric circuit, such as a gate driver, that converts the control signal from the controller 21 into a control signal for the switching elements by raising the voltage to an operating voltage of the switching elements that configure the inverter 3 may be provided between the controller 21 and the inverter 3. The inverter 3 corresponds to an exemplary power conversion device of the present invention.

The DC-DC converter 4 decreases the voltage of the driving battery 1, and outputs the decreased voltage to the auxiliary machine battery 5. The auxiliary machine battery 5 is a battery for supplying an electric power to each auxiliary machine (each load) mounted on the electric vehicle. The auxiliary machine battery 5 is charged by an electric power from the DC-DC converter 4.

The on board charger 6 (OBC) is a device that operates when the driving battery 1 is charged by a power feeding facility disposed outside the electric vehicle. Conventionally, for the power feeding facility, there have been known a power feeding facility configured to correspond to a normal charging method and a power feeding facility configured to correspond to a rapid charging method. The normal charging method is a method of charging the driving battery 1 using a power source of a single-phase alternate current of 100 V or 200 V. The rapid charging method is a method of charging the driving battery 1 using a power source of three phase of 200 V. The rapid charging method is able to charge to a full charge in a short time compared with the normal charging method. The on board charger 6 is used to charge the driving battery 1 by the normal charging method. The on board charger 6 is electrically connected to a charging port of the electric vehicle. A charging cable of the power feeding facility is connected to the charging port of the electric vehicle, and once the electric power from the power feeding facility is supplied, the AC power from the power feeding facility is input to the on board charger 6. The on board charger 6 converts the input AC power to a DC power, and outputs the converted DC power to the driving battery 1. The on board charger 6 corresponds to an exemplary on board charger of the present invention.

Next, of the configurations included in the cooling system 100, the configuration that is disposed inside the cooling water flow passage 11 or in the vicinity thereof, and is for cooling down the driving battery 1, the motor 2, the inverter 3, and the on board charger 6 described above will be described.

As illustrated in FIG. 1, the chiller 12, a compressor 13, and a capacitor 14 configure a cooling circuit driven by, for example, the auxiliary machine battery 5. The cooling circuit has a cooling gas flow passage that allows a cooling gas to circulate as illustrated in FIG. 1. The compressor 13 compresses the cooling gas and discharges the compressed cooling gas having a high temperature and a high pressure. The capacitor 14 exchanges heat between the compressed cooling gas and the cooling gas flowing in the cooling gas flow passage, emits the heat of the compressed cooling gas, thus cooling down the compressed cooling gas.

The chiller 12 is a device for cooling down the cooling water before the heat exchange is performed with the driving battery 1. The chiller 12 is disposed between the on board charger 6 and the driving battery 1 in the cooling water flow passage 11. The chiller 12 exchanges heat between the cooling gas flowing in the cooling gas flow passage and the cooling water flowing in the cooling water flow passage 11, absorbs the heat of the cooling water flowing in the cooling water flow passage 11, thus cooling down the cooling water. A control signal is input to the chiller 12 from the controller 21, and the chiller 12 operates or stops corresponding to the control signal. When the chiller 12 operates, the cooling water flowed from the on board charger 6 side is cooled down as described above. On the other hand, when the chiller 12 stops, the cooling water flowed from the on board charger 6 side is not cooled down.

The valve A is disposed between the chiller 12 and the driving battery 1 in the cooling water flow passage 11. The valve A is electrically connected to the flow rate control device 20, and opens and closes corresponding to the control signal from the controller 21. When the valve A opens in accordance with the control signal from the controller 21, the cooling water that has passed the chiller 12 is transmitted to the driving battery 1. On the other hand, when the valve A closes in accordance with the control signal from the controller 21, the cooling water is not transmitted to the driving battery 1.

The valve B is disposed in a branch passage branching between the on board charger 6 and the chiller 12 in the cooling water flow passage 11. When the cooling water flow passage 11 through which the cooling water flows in the order from the driving battery 1, the inverter 3, the motor 2, and the on board charger 6 is a main stream, the branch passage where the valve B is disposed is the cooling water flow passage 11 that branches from the main stream between the on board charger 6 and the chiller 12, and joins to the main stream between the driving battery 1 and the pump A. The valve B is a bypassing valve not for transmitting the cooling water to the driving battery 1 but for transmitting the cooling water to the other devices. The valve B is electrically connected to the flow rate control device 20, and opens and closes corresponding to the control signal from the controller 21. When the valve B opens in accordance with the control signal from the controller 21, the cooling water is transmitted to the pump A from the on board charger 6. On the other hand, when the valve B closes in accordance with the control signal from the controller 21, the cooling water from the on board charger 6 is not transmitted to the pump A. The valve A and the valve B correspond to exemplary valves of the present invention.

The pump A is a water pump for transmitting the cooling water to the cooling water flow passage 11. The pump A is disposed between the driving battery 1 with the valve B and the radiator 15 with the valve C in the cooling water flow passage 11. The pump A is electrically connected to the flow rate control device 20, and operates or stops corresponding to the control signal from the controller 21. When the pump A operates in accordance with the control signal from the controller 21, the cooling water sent out of the pump A is transmitted to the valve C after being cooled down by the radiator 15. On the other hand, when the pump A stops in accordance with the control signal from the controller 21, the cooling water is not sent out of the pump A, and the cooling water does not flow in the cooling water flow passage 11. The pump A functions as transfer means for the cooling water in the cooling water flow passage 11.

The radiator 15 is a device for cooling down the cooling water before heat exchange is performed between the motor 2 and the inverter 3. The radiator 15 is disposed between the pump A and the motor 2 with the inverter 3 in the cooling water flow passage 11. In the embodiment, the radiator 15 is operated by a predetermined control device, and the cooling water transmitted from the pump A is cooled down by the radiator 15.

The valve C has a function of controlling a water flow rate of the radiator output side. Specifically, the valve C controls the water flow rate of the radiator 15 so as not to let the water that has passed through the radiator perform cooling until the temperature of the water of the motor 2 and the inverter 3 increases to a predetermined water temperature. That is, the valve C has a function equal to that of a thermostat of an engine radiator. Therefore, the valve C controls a water quantity of the radiator 15 with a water temperature at an inlet of the inverter 3 or at an outlet of the valve C being a target value (for example, stops only the water of the radiator or reduces the water quantity). For example, when the water temperature at the inlet of the inverter 3 is 40°C or more, the valve C opens to cause the water of the radiator 15 to flow. When the water temperature at the inlet of the inverter 3 is less than 40°C, the water of the radiator 15 is stopped (passing water to the radiator 15 is stopped) to decrease the water temperature drop at the inlet of the inverter 3.

Next, the flow rate control device 20 will be described. The flow rate control device 20 includes the controller 21 allowing to achieve the flow rate control method of the present invention. The controller 21 is configured as an electronic control unit made of a computer including hardware and software. The computer of the controller 21 is configured of a ROM (Read Only Memory) for executing warming-up control, cooling-down control, and flow rate control, a CPU (Central Processing Unit) executing programs stored in this ROM, and a RAM (Random Access Memory) functioning as an accessible storage device. Note that, for the operation circuit, MPU (Micro Processing Unit), DSP (Digital Signal Processor), ASIC (Application Specific Integrated Circuit), FPGA (Field Programmable Gate Array), and the like may be used instead of the CPU or together with the CPU. The flow rate control device 20 corresponds to an exemplary flow rate control device of the present invention.

A warming-up function achieved by the controller 21 will be described. The controller 21 controls the inverter 3 such that the ripple charging and discharging that repeats charging and discharging for multiple times in the driving battery 1 is executed by the warming-up function when a warming-up request is input. The warming-up request is a signal for raising the temperature of the driving battery 1 by ripple charging and discharging. The warming-up request is input to the controller 21 at least when the temperature of the driving battery 1 is lower than a predetermined warming-up target threshold (unit: temperature). The warming-up target threshold is a temperature determined in advance, and is, for example, 10°C. For example, the controller 21 obtains the temperature of the driving battery 1 from a temperature sensor detecting the temperature of the driving battery 1. The controller 21 compares the temperature of the driving battery 1 with the warming-up target threshold, and when the temperature of the driving battery 1 is lower than the warming-up target threshold, the controller 21 generates a control signal for ripple charging and discharging that turns on or off the switching elements that configure the inverter 3 by pulse-width modulation system. The control signal for ripple charging and discharging is a control signal for flowing a ripple current in a pulse shape alternately repeating charging and discharging at a predetermined cycle to the driving battery 1 from the inverter 3.

Here, a method for generating the control signal for ripple charging and discharging according to the embodiment will be described. Conventionally, as a method for generating a control signal to a switching element, there has been known a pulse-width modulation system that generates a gate driving signal for the switching element based on a comparison between a three-phase alternating-current voltage command value and a carrier wave (carrier). In the embodiment, the controller 21 compares carrier waves having phases corresponding to the respective phases of the motor 2, not the same carrier waves with no phase differences, with the three-phase alternating-current voltage value, and generates control signals for ripple charging and discharging to the switching elements of the respective phases. For example, the controller 21 sets a phase difference of 180 degrees between a carrier wave (carrier wave A) as a comparison target of an alternating-current voltage command value of the U-phase and a carrier wave (carrier wave B) as a comparison target of an alternating-current voltage command value of the V-phase and the W-phase. The controller 21, then, generates a control signal for ripple charging and discharging to the switching element of the U-phase based on the comparison between the alternating-current voltage command value of the U-phase and the carrier wave A. The controller 21 also generates a control signal for ripple charging and discharging to the switching element of the V-phase based on the comparison between the alternating-current voltage command value of the V-phase and the carrier wave B, and generates a control signal for ripple charging and discharging to the switching element of the W-phase based on the comparison between the alternating-current voltage command value of the W-phase and the carrier wave B. By generating the control signals for ripple charging and discharging using the carrier wave having the phase corresponding to each of the phases of the motor 2, the ripple current having the same component as that of the frequency (carrier frequency) of the carrier wave is generatable. Compared with the ripple current generated using the same carrier waves with no phase differences, the ripple current having a high frequency component is generatable. As the result, a heat generation amount in the internal resistance can be increased to allow enhancing the temperature increase rate of the driving battery 1. Note that the carrier wave A and the carrier wave B having the phase difference of 180 degrees as described above are merely an example, and the phase difference between the carrier waves is not limited to 180 degrees. In order to obtain the above-described effect, it is only necessary that the carrier waves have two or more phases of the motor 2 differing from one another.

The controller 21 outputs the control signal for ripple charging and discharging to the inverter 3 as an execution command to the inverter 3. This causes the inverter 3 to repeatedly turning on and off the switching elements of the respective phases by the control signal for ripple charging and discharging, and the ripple current flows from the inverter 3 to the driving battery 1.

As an example where the warming-up request is input, the case where the temperature of the driving battery 1 is lower than the warming-up target threshold has been described, but the configuration in which, when the state of the electric vehicle satisfies a predetermined condition in addition to the temperature condition of the driving battery 1, the warming-up request is input to the controller 21, may be employed. The state of the electric vehicle for performing the ripple charging and discharging includes at least any one of the state of charging the driving battery 1 from a power feeding facility provided outside the electric vehicle, the state where the electric vehicle is stopped with the ignition switch turned on, and the state where the ignition switch is turned off and the warming-up switch is turned on. The warming-up switch is a switch that is provided in the vehicle and can be operated by a passenger for warming-up the driving battery 1. When the electric vehicle is in any state of these states, and the temperature of the driving battery 1 is lower than the warming-up target threshold, the warming-up request is input to the controller 21, and the controller 21 controls the inverter 3 by warming-up function.

Next, a cooling-down function achieved by the controller 21 will be described. The cooling-down function is a function for cooling down the driving battery 1. When the cooling-down request is input, the controller 21 outputs the control signal for operating the chiller 12 to the chiller 12 and cools down the cooling water to be transmitted to the driving battery 1 with the chiller 12 by the cooling-down function. The cooling water to be transmitted to the driving battery 1 is cooled down, and thus, the heat release to the cooling water from the driving battery 1 is accelerated to cool down the driving battery 1. The cooling-down request is a signal for operating the chiller 12. The cooling-down request is input to the controller 21 at least when the temperature of the driving battery 1 is higher than a predetermined cooling-down threshold (unit: temperature). The cooling-down threshold is a temperature higher than the above-described warming-up target threshold. The cooling-down threshold is a temperature determined in advance, and is, for example, 40°C. For example, the controller 21 compares the temperature of the driving battery 1 with the cooling-down threshold, and when the temperature of the driving battery 1 is higher than the cooling-down threshold, the control signal for operating the chiller 12 is output to the chiller 12.

Next, a flow rate control function achieved by the controller 21 will be described. The flow rate control function is a function for controlling the flow rate of the cooling water flowing in the cooling water flow passage 11. In the embodiment, when the temperature of the driving battery 1 is higher than the temperature of the cooling water to be transmitted to the driving battery 1 while the ripple charging and discharging is executed, the controller 21 reduces the flow rate of the cooling water to the driving battery 1 compared with the case where the temperature of the driving battery 1 is lower than the temperature of the cooling water by controlling opening and closing of the valve A and the valve B. The cooling water to be transmitted to the driving battery 1 is a cooling water before exchanging heat with the driving battery 1 (hereinafter, also referred to as the cooling water before heat exchange with the driving battery 1). In the example in FIG. 1, the cooling water before heat exchange with the driving battery 1 is a cooling water flowing in the cooling water flow passage 11 between the chiller 12 and the driving battery 1. A water temperature sensor (not illustrated) that detects the temperature of the cooling water is disposed between the chiller 12 and the valve A in the cooling water flow passage 11. The temperature of the cooling water before heat exchange with the driving battery 1 detected by the water temperature sensor is output to the flow rate control device 20. Note that the water temperature sensor may be disposed between the valve A and the driving battery 1 in the cooling water flow passage 11.

The controller 21 controls opening and closing of the valve A and the valve B such that the inverter 3 and the cooling water exchange heat and the motor 2 and the cooling water exchange heat while the ripple charging and discharging is executed. When the temperature of the driving battery 1 is higher than the temperature of the cooling water before heat exchange with the driving battery 1 while the ripple charging and discharging is executed, the controller 21 controls opening and closing the valve A and the valve B such that any of the flow rates of the flow rate of the cooling water that exchanges heat with the inverter 3 and the flow rate of the cooling water that exchanges heat with the motor 2 is increased more than the flow rate of the cooling water before heat exchange with the driving battery 1. In the case of the configuration of the cooling water flow passage in which the motor 2 and the inverter 3 are arranged in series in the cooling water flow passage 11 as in the embodiment, the flow rate of the cooling water that exchanges heat with the motor 2 and the flow rate of the cooling water that exchanges heat with the inverter 3 each fail to be independently controlled, and therefore, the flow rate of the cooling water that exchanges heat with the motor 2 and the flow rate of the cooling water that exchanges heat with the inverter 3 are substantially equal. In view of this, the target that is increased more than the flow rate of the cooling water before heat exchange with the driving battery 1 by the controller 21 is any of the flow rates of the flow rate of the cooling water that exchanges heat with the inverter 3 and the flow rate of the cooling water that exchanges heat with the motor 2. On the other hand, unlike the embodiment, in the case of the configuration of the cooling water flow passage in which the motor 2 and the inverter 3 are arranged in parallel in the cooling water flow passage 11, the flow rate of the cooling water that exchanges heat with the motor 2 and the flow rate of the cooling water that exchanges heat with the inverter 3 are controllable in a manner independent of one another. In view of this, when the motor 2 and the inverter 3 are arranged in parallel in the cooling water flow passage 11, and the temperature of the driving battery 1 is higher than the temperature of the cooling water before heat exchange with the driving battery 1 while the ripple charging and discharging is executed, the controller 21 controls opening and closing of the valve A and the valve B such that a sum of the flow rate of the cooling water that exchanges heat with the inverter 3 and the flow rate of the cooling water that exchanges heat with the motor 2 is increased more than the flow rate of the cooling water before heat exchange with the driving battery 1. When the temperature of the driving battery 1 is lower than the temperature of the cooling water before heat exchange with the driving battery 1 while the ripple charging and discharging is executed, the controller 21 controls opening and closing of the valve A and the valve B such that the cooling water that has received the heat generated by the inverter 3 and the cooling water that has received the heat generated from the motor 2 exchange heat with the driving battery 1. When the temperature of the driving battery 1 is lower than the temperature of the cooling water before heat exchange with the driving battery 1 while the ripple charging and discharging is executed, the controller 21 controls opening and closing of the valve A and the valve B such that the cooling water is circulated to exchange heat with each of the devices.

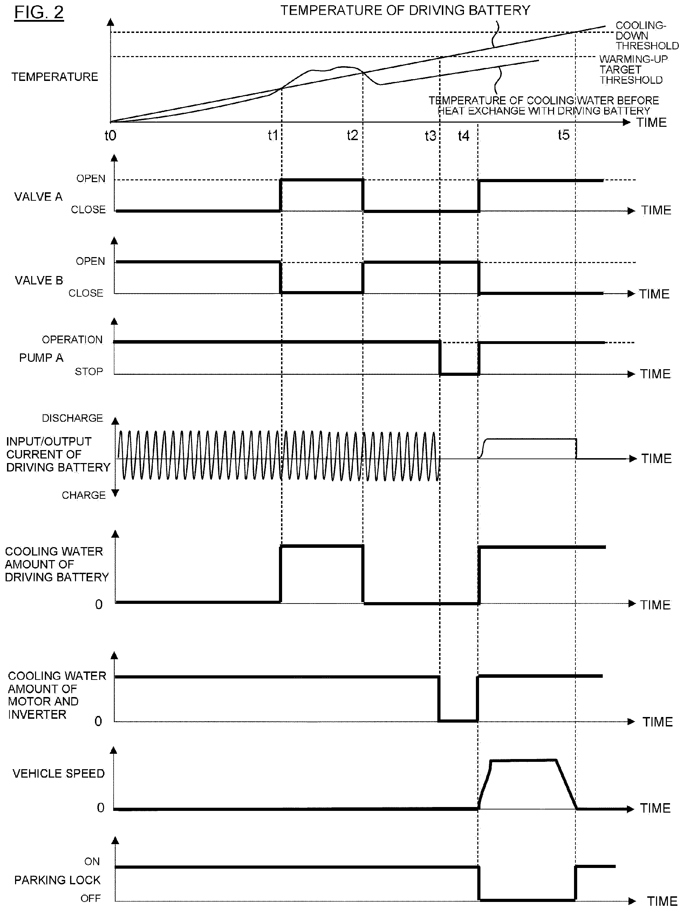

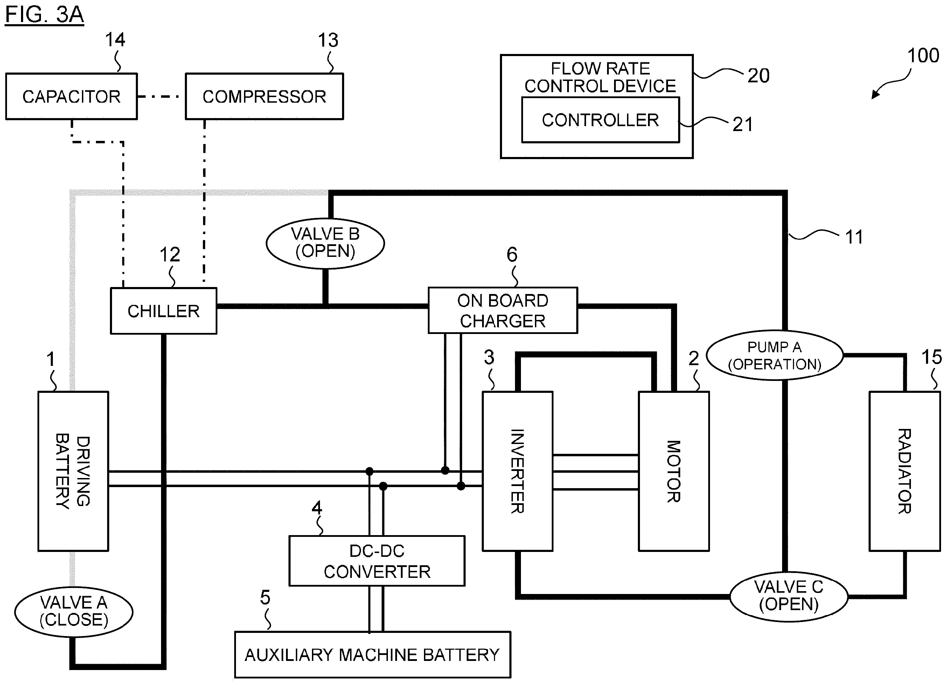

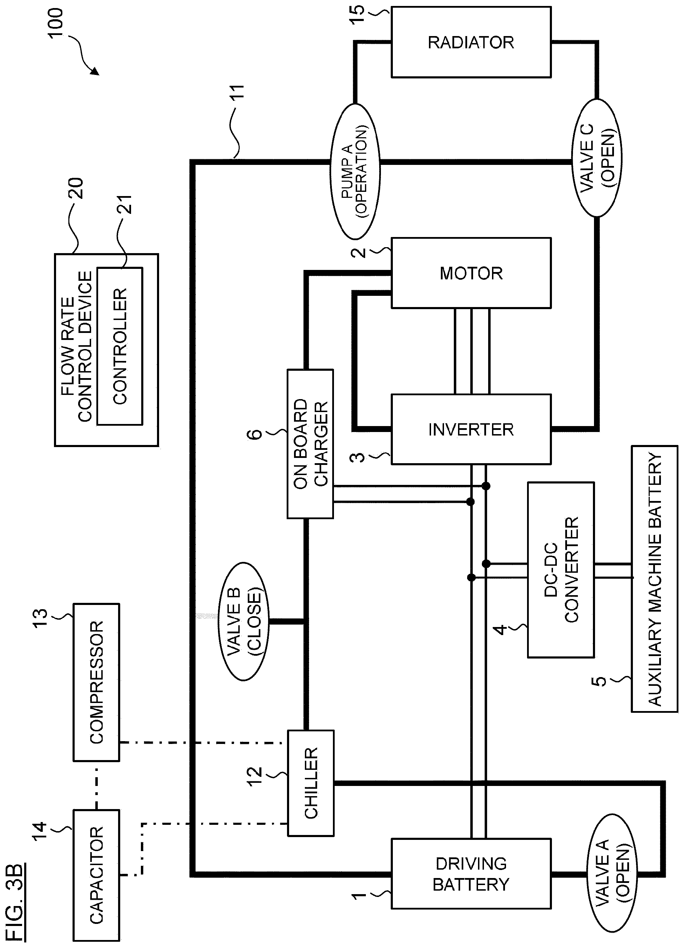

With reference to FIG. 2 and FIG. 3, a flow rate control method of the cooling water will be described. FIG. 2 is an exemplary timing chart for describing the flow rate control method of the cooling water.

FIG. 2 illustrates each of states of temperatures (the temperature of the driving battery 1, the temperature of the cooling water before heat exchange with the driving battery 1), an open/close state of the valve A, an open/close state of valve B, an operation state of the pump A, an input/output current of the driving battery 1, a cooling water amount of the driving battery 1, a cooling water amount of the motor 2 and the inverter 3, a vehicle speed of the electric vehicle, and a parking lock of the electric vehicle from the top. In FIG. 2, the horizontal axes indicate time.

At Time t₀, the electric vehicle is stopped by parking lock mechanism. The parking lock mechanism is a mechanism for locking a gear in a gear box, and is a mechanism that makes an axle shaft as an output shaft unrotatable. The gear box is provided on the axle shaft connecting right and left driving wheels. Once the parking lock is turned on, gear teeth of the gear engage with the parking lock and the gear is locked, and thus, the rotation of the driving wheels is restrained. On the other hand, once the parking lock is turned off, the gear released from being locked is rotatable, and the driving force from the motor 2 rotates the driving wheels.

As illustrated in FIG. 2, at Time t₀, the temperature of the driving battery 1 is lower than the warming-up target threshold. Since it is in the state where the temperature of the driving battery 1 is lower than the warming-up target threshold and the vehicle is stopped, the warming-up request is input to the controller 21, and the controller 21 outputs the control signal for ripple charging and discharging to the inverter 3. Time t₀ is the time at which the ripple charging and discharging is started in the driving battery 1.

At Time t0, the controller 21 outputs the control signal for operating the pump A to the pump A and sends out the cooling water to the cooling water flow passage 11. The controller 21 outputs the control signal for closing the valve A to the valve A and outputs the control signal for opening the valve B to the valve B.

FIG. 3A is a drawing illustrating a state where the cooling water does not flow to the driving battery 1 in the cooling system 100 illustrated in FIG. 1. When the valve A is closed and the valve B is opened, as illustrated in FIG. 3A, after being cooled down by the radiator 15, the cooling water sent out of the pump A circulates the cooling water flow passage 11 in the order from the inverter 3, the motor 2, the on board charger 6, and the pump A. Meanwhile, since the valve A is closed, the cooling water is not transmitted to the driving battery 1, thus, no cooling water flows in the driving battery 1.

Referring again to FIG. 2, after Time t₀, the controller 21 obtains the temperature of the driving battery 1 from the temperature sensor that detects the temperature of the driving battery 1 and obtains the temperature of the cooling water before heat exchange with the driving battery 1 from the water temperature sensor disposed between the chiller 12 and the valve A.

From Time to to Time t₁, the driving battery 1 has heat generated inside thereof by the ripple charging and discharging, and the temperature of the driving battery 1 is increased. That is, the warming-up control of the driving battery 1 by the ripple charging and discharging is executed. In the inverter 3, the switching element is repeatedly turned on and off for ripple charging and discharging, and therefore, the inverter 3 generates heat. The current caused by the ripple current flows in the motor 2, and the motor 2 generates heat. The cooling water before exchanging heat with the driving battery 1 is warmed by the heat generated by the inverter 3 and the motor 2, and thus, the temperature of the cooling water before heat exchange with the driving battery 1 is also increased. From Time to to Time t₁, since the temperature of the driving battery 1 is higher than the temperature of the cooling water before heat exchange with the driving battery 1, the controller 21 outputs the control signal for closing the valve A to the valve A and outputs the control signal for opening the valve B to the valve B. From Time to to Time t₁, as illustrated in FIG. 3 (A), the cooling water does not flow in the driving battery 1.

At Time t₁, the temperature of the cooling water before heat exchange with the driving battery 1 is higher than the temperature of the driving battery 1. The controller 21 outputs the control signal for opening the valve A to the valve A and outputs the control signal for closing the valve B to the valve B.

FIG. 3B is a drawing illustrating a state where the cooling water flows in the driving battery 1 in the cooling system 100 illustrated in FIG. 1. When the valve A is opened and the valve B is closed, as illustrated in FIG. 3B, after being cooled down by the radiator 15, the cooling water sent out of the pump A circulates in the cooling water flow passage 11 in the order from the inverter 3, the motor 2, the on board charger 6, the driving battery 1, and the pump A. Since the valve A is opened, the cooling water is transmitted to the driving battery 1, thus, the cooling water flows in the driving battery 1.

Referring again to FIG. 2, from Time t₁ to Time t₂, since the temperature of the driving battery 1 is lower than the temperature of the cooling water before heat exchange with the driving battery 1, the controller 21 outputs the control signal for opening the valve A to the valve A and outputs the control signal for closing the valve B to the valve B. From Time t₁ to Time t₂, as illustrated in FIG. 3B, the cooling water flows in the driving battery 1.

At Time t₂, the temperature of the driving battery 1 is higher than the temperature of the cooling water before heat exchange with the driving battery 1. The controller 21 outputs the control signal for closing the valve A to the valve A and outputs the control signal for opening the valve B to the valve B. In view of this, as illustrated in FIG. 3 (A), again, the cooling water is not transmitted to the driving battery 1, and therefore, no cooling water flows in the driving battery 1.

From Time t₂ to Time t₃, since the temperature of the driving battery 1 is higher than the temperature of the cooling water before heat exchange with the driving battery 1, the controller 21 outputs the control signal for closing the valve A to the valve A and outputs the control signal for opening the valve B to the valve B. From Time t₂ to Time t₃, as illustrated in FIG. 3A, no cooling water flows in the driving battery 1.

As the result of the temperature rise of the driving battery 1 by ripple charging and discharging from Time t₀, the temperature of the driving battery reaches the warming-up target threshold at Time t3. The controller 21 stops outputting the control signal for ripple charging and discharging to the inverter 3 as a stop command of the ripple charging and discharging. The controller 21 outputs the control signal for stopping the pump A to the pump A. The stop of the pump A causes no cooling water to flow in the driving battery 1, the motor 2, or the inverter 3. The reason of no cooling water flowing in the cooling water flow passage 11 is based on the aspect that there is no cause of heat generation in the driving battery 1, the motor 2, or the inverter 3 as there is no necessity of the ripple charging and discharging and the electric vehicle is stopped.

At Time t₄, as soon as the parking lock is turned off, the electric vehicle starts to travel. The controller 21 outputs the control signal for operating the pump A to the pump A. The controller 21 outputs the control signal for opening the valve A to the valve A and outputs the control signal for closing the valve B to the valve B. In view of this, as illustrated in FIG. 3B, in the cooling system 100, after being cooled down by the radiator 15, the cooling water sent out of the pump A circulates in the cooling water flow passage 11 in the order from the inverter 3, the motor 2, the on board charger 6, the driving battery 1, and the pump A. The driving battery 1, the motor 2, and the inverter 3 that generate heat in association with the traveling of the electric vehicle can be cooled down.

As the result of the temperature rise of the driving battery 1 in association with the traveling of the electric vehicle, at Time t₅, the temperature of the driving battery reaches the cooling-down threshold. The cooling-down request is input to the controller 21, and the controller 21 outputs the control signal for operating the chiller 12 to the chiller 12. This cools down the cooling water before heat exchange with the driving battery 1 and accelerates the cooling down of the driving battery 1. Note that the parking lock is turned on and the electric vehicle is again stopped at Time t₅.

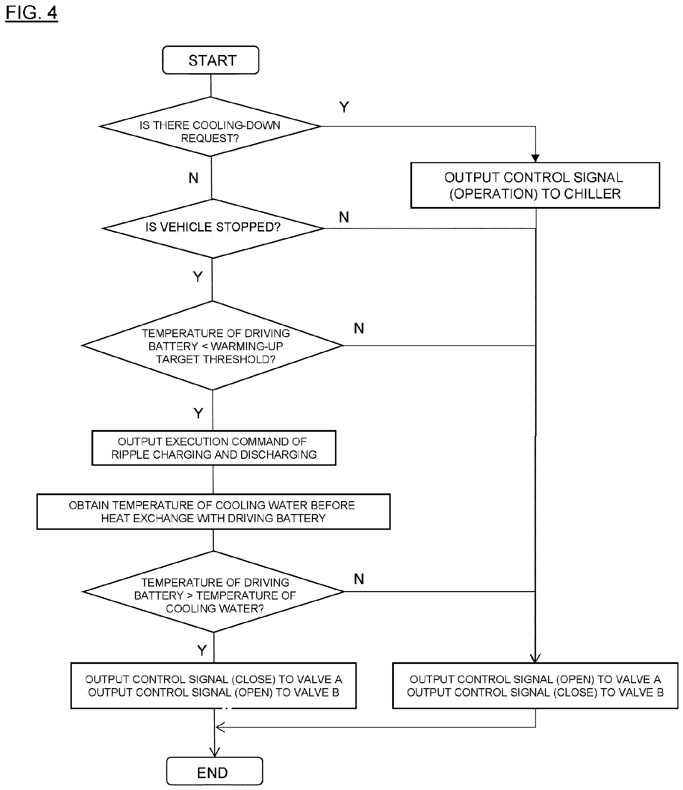

FIG. 4 is an exemplary flowchart illustrating the flow rate control method of the cooling water according to the embodiment. The flowchart illustrated in FIG. 4 is executed at each predetermined cycle by the controller 21.

At step S1, the controller 21 determines whether there is a cooling-down request of the driving battery 1 or not. The cooling-down request of the driving battery 1 is input to the controller 21 at least when the temperature of the driving battery 1 is higher than the predetermined cooling-down threshold. When the cooling-down request is input to the controller 21, the procedure proceeds to Step S8, and when the cooling-down request is not input to the controller 21, the procedure proceeds to Step S2.

At Step S2, the controller 21 determines whether the electric vehicle is stopped or not. For example, the controller 21 obtains a signal indicating the operation state of the parking lock mechanism from another control device that controls the operation of the parking lock mechanism to determine whether the parking lock is turned on or off. When it is determined that the parking lock is turned on and the vehicle is stopped, the procedure proceeds to Step S3, and when it is determined that the parking lock is turned off and the vehicle is not stopped, the procedure proceeds to Step S9.

At Step S3, the controller 21 compares the temperature of the driving battery 1 with the warming-up target threshold, and determines whether the temperature of the driving battery 1 is lower than the warming-up target threshold or not. The timing at which the temperature of the driving battery 1 is obtained from the temperature sensor is not limited, the controller 21 may obtain the temperature of the driving battery 1 from the temperature sensor at Step S3 or may obtain the temperature of the driving battery 1 from the temperature sensor before Step S3. When an affirmative determination is made by the controller 21, the procedure proceeds to Step S4, and when a negative determination is made by the controller 21, the procedure proceeds to Step S9. Note that the controller 21 may determine whether there is a warming-up request of the driving battery 1 or not as a step in which Step 2 and Step 3 are integrated into one, similarly to Step S1. That is, the flowchart illustrated in FIG. 4 may be a flowchart in which the procedure proceeds to Step 4 when the warming-up request is input to the controller 21 and the procedure proceeds to Step S9 when the warming-up request is not input to the controller 21.

At Step S4, the controller 21 outputs the control signal for ripple charging and discharging to the inverter 3 as an execution command of the ripple charging and discharging. In the inverter 3, the switching element is repeatedly turned on and off corresponding to the control signal for ripple charging and discharging, and the ripple current for alternately charging and discharging for multiple times is output from the inverter 3 to the driving battery 1.

At Step S5, the controller 21 obtains the temperature of the cooling water before heat exchange with the driving battery 1 from the water temperature sensor.

At Step S6, the controller 21 compares the temperature of the driving battery 1 with the temperature of the cooling water before heat exchange with the driving battery 1 obtained at Step S5, and determines whether the temperature of the driving battery 1 is higher than the temperature of the cooling water before heat exchange with the driving battery 1 or not. When an affirmative determination is made by the controller 21, the procedure proceeds to Step S7, and when a negative determination is made by the controller 21, the procedure proceeds to Step S9.

At Step S7, the controller 21 outputs the control signal for closing the valve A to the valve A and outputs the control signal for opening the valve B to the valve B. In view of this, as illustrated in FIG. 3A, closing the valve A causes no cooling water to flow in the driving battery 1. On the other hand, opening the valve B causes the cooling water to flow in the inverter 3, the motor 2, and the on board charger 6. When the process at Step S7 is finished, the controller 21 terminates the process of the flowchart illustrated in FIG. 4.

When a negative determination is made at Step S1, the procedure proceeds to Step S8. At Step S8, the controller 21 outputs the control signal for operating the chiller 12 to the chiller 12. When the process at Step S8 is finished, the procedure proceeds to Step S9.

When a negative determination is made in any of the steps of Step S2, Step S3, or Step S6, or when the process at Step S8 is finished, the procedure proceeds to Step S9. At Step S9, the controller 21 outputs the control signal for opening the valve A to the valve A and outputs the control signal for closing the valve B to the valve B. In view of this, as illustrated in FIG. 3 (B), opening the valve A causes the cooling water to flow in the driving battery 1. The cooling water sent out of the pump A circulates in the cooling water flow passage 11 in the order of the inverter 3, the motor 2, the on board charger 6, the driving battery 1, and the pump A. When the process is finished at Step S9, the controller 21 terminates the process of the flowchart illustrated in FIG. 4.

As described above, in the embodiment, when, in the electric vehicle on which the motor 2 that drives the electric vehicle, the driving battery 1 that is allowed to supply an electric power to the motor 2, and the inverter 3 disposed between the motor 2 and the driving battery 1 are mounted, the temperature of the driving battery 1 is lower than the predetermined warming-up target threshold, the execution command of ripple charging and discharging that alternately charges and discharges for multiple times with the driving battery 1 is output to the inverter 3, and when the temperature of the driving battery 1 is higher than the temperature of the cooling water that exchanges heat with the driving battery 1 while the ripple charging and discharging is executed, the flow rate of the cooling water is reduced compared with the case where the temperature of the driving battery 1 is lower than the temperature of the cooling water. This allows suppressing or reducing that the heat generated in the driving battery 1 by the ripple charging and discharging is emitted to the cooling water, and therefore, the temperature of the driving battery 1 can be efficiently raised by the ripple charging and discharging. As the result, the temperature rise rate of the driving battery 1 is increased, and the inputtable/outputtable electric power of the driving battery 1 can be increased promptly from a low temperature state. For example, shortening of the charging time by the rapid charging method may be attempted. For example, the chargeable power of the driving battery 1 by regeneration at deceleration is increased, and therefore, improvement in electricity cost performance of the driving battery 1 may be attempted.

In the embodiment, the electric vehicle includes the cooling water flow passage 11, and the valves A, B, and the pump A disposed in the cooling water flow passage 11. The controller 21 controls opening and closing of the valve A and the valve B, and thus, reduces the flow rate of the cooling water when the temperature of the driving battery 1 is higher than the temperature of the cooling water exchanging heat with the driving battery 1 while the ripple charging and discharging is executed, compared with the case where the temperature of the driving battery 1 is lower than the temperature of the cooling water. The simple method of open/close control of the valves allows efficiently raising the temperature of the driving battery 1 by ripple charging and discharging. Since it is achievable by installing the valve A and the valve B in the cooling water flow passage 11, suppression of enlargement of the cooling system 100 may be achieved.

In the embodiment, the cooling water flow passage 11 is a flow passage through which the cooling water that exchanges heat with the driving battery 1, the cooling water that exchanges heat with the inverter 3, and the cooling water that exchanges heat with the motor 2 are allowed to circulate. The controller 21 controls opening and closing of the valve A and the valve B such that the inverter 3 and the cooling water exchange heat and the motor 2 and the cooling water exchange heat while the ripple charging and discharging is executed. This enables the heat generated in the motor 2 and the inverter 3 by ripple charging and discharging to be emitted in the cooling water thus allowing cooling down the motor 2 and the inverter 3. As the result, the possibility of breakdown of the motor 2 and the inverter 3 caused by heat may be reduced.

In the embodiment, the controller 21 controls opening and closing of the valve A and the valve B such that any flow rate of the flow rate of the cooling water that exchanges heat with the inverter 3 and the flow rate of the cooling water that exchanges heat with the motor 2 is increased more than the flow rate of the cooling water before heat exchange with the driving battery 1 when the temperature of the driving battery 1 is higher than the temperature of the cooling water before heat exchange with the driving battery 1 while the ripple charging and discharging is executed. This allows suppressing or reducing the emission of the heat generated in the driving battery 1 to the cooling water, also allows emitting the heat generated in the motor 2 and the inverter 3 to the cooling water.

In the embodiment, the controller 21 controls opening and closing of the valve A and the valve B such that the cooling water that has received the heat generated by the inverter 3 and the cooling water that has received the heat generated by the motor 2 exchange heat with the driving battery 1 when the temperature of the driving battery 1 is lower than the temperature of the cooling water before heat exchange with the driving battery 1 while the ripple charging and discharging is executed. This causes the cooling water warmed up by the heat generated by the motor 2 and the inverter 3 to exchange heat with the driving battery 1 thereby allowing heating the driving battery 1 from outside. In addition to self-heating by ripple charging and discharging, the heating from outside makes more efficient warm-up of the driving battery 1 achievable.

In the embodiment, the controller 21 controls opening and closing of the valve A and the valve B such that the cooling water is circulated and exchanges heat with each of the devices when the temperature of the driving battery 1 is lower than the temperature of the cooling water before heat exchange with the driving battery 1 while the ripple charging and discharging is executed. The cooling water heated by the heat generated by the motor 2 and the inverter 3 can be transmitted to the driving battery 1 in a state where the heat generated by ripple charging and discharging is not emitted to the cooling water. As the result, an effect equal to the above-described effect can be obtained.

In the embodiment, in the state where the electric car is stopped by the parking lock mechanism that makes the output shaft unrotatable, the controller 21 outputs the execution command of ripple charging and discharging. Even in the state where the rotation of the driving wheels is not stoppable due to the driving force from the motor 2 by ripple charging and discharging, the driving battery 1 can be warmed up.

### Second Embodiment

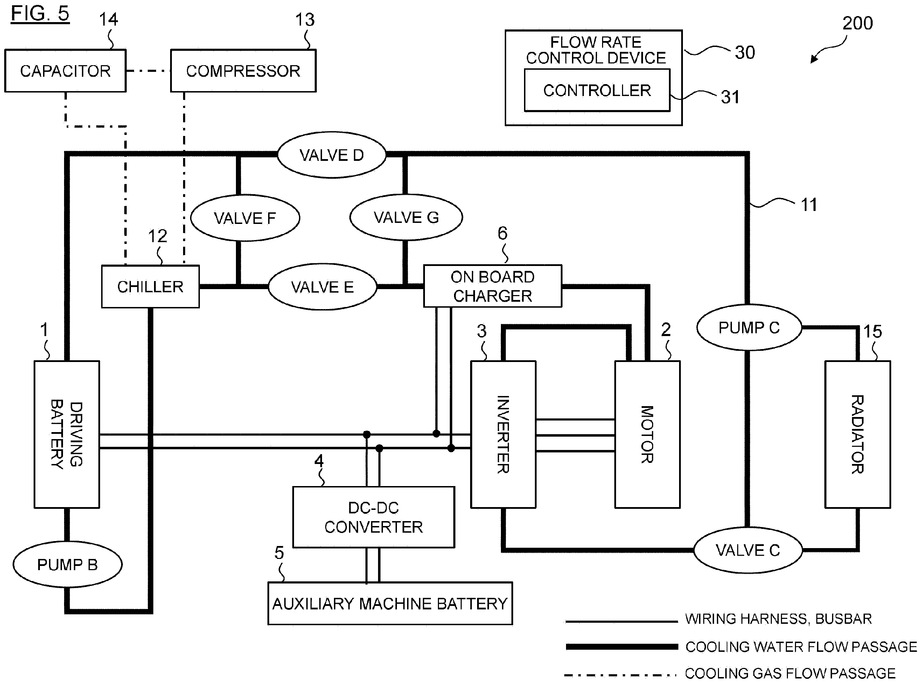

FIG. 5 is a configuration schematic diagram of a cooling system 200 according to a second embodiment. The cooling system 200 according to the embodiment has a configuration similar to that of the cooling system 100 except that a configuration of valves and pumps disposed in the cooling water flow passage 11 and a flow rate control function of a controller 31 included in a flow rate control device 30 are different from those of the cooling system 100 according to the first embodiment described above. In view of this, in FIG. 5, the configurations similar to those of the cooling system 100 have similar reference numerals as the reference numerals illustrated in FIG. 1, and for descriptions for the configurations similar to those of the cooling system 100, the descriptions described above are employed as necessary.

As illustrated in FIG. 5, the cooling water flow passage 11 according to the embodiment is provided with a pump B, a pump C, and a valve C to a valve G. Similarly to the first embodiment, the pump B, the pump C, and the valve C to the valve G are electrically connected to the flow rate control device 30. The pump B and the pump C operate or stop corresponding to control signals from the controller 31, and the valve C to the valve G open and close corresponding to control signals from the controller 31.

The pump B is a water pump for transmitting a cooling water to the cooling water flow passage 11. The pump B is disposed at a position corresponding to the valve A in the first embodiment. As soon as the pump B operates by the control signal from the controller 31, the cooling water is transmitted from the pump B to the driving battery 1. On the other hand, as soon as the pump B stops by the control signal from the controller 31, the cooling water is not sent out of the pump B, and thus, no cooling water is transmitted to the driving battery 1.

The pump C is a water pump corresponding to the pump A illustrated in FIG. 1, and therefore, the description described above is employed for the description of the pump C.

The valve D is disposed between the driving battery 1 and the pump C in the cooling water flow passage 11. As soon as the valve D opens by the control signal from the controller 31, the cooling water is transmitted to the pump C. On the other hand, as soon as the valve D closes by the control signal from the controller 31, no cooling water is transmitted to the pump C.

The valve E is disposed between the on board charger 6 and the chiller 12 in the cooling water flow passage 11. As soon as the valve E opens by the control signal from the controller 31, the cooling water is transmitted to the chiller 12 and the valve F. On the other hand, as soon as the valve E closes by the control signal from the controller 31, no cooling water is transmitted to the chiller 12 or the valve F.

The valve F is disposed in a branch passage branching between the valve E and the chiller 12 in the cooling water flow passage 11. When the cooling water flow passage 11 through which the cooling water flows in the order from the driving battery 1, the inverter 3, the motor 2, and the on board charger 6 is a main stream, the branch passage where the valve F is disposed is a cooling-down flow passage that branches from the main stream between valve E and the chiller 12, and joins to the main stream between the driving battery 1 and the valve D.

The valve G is disposed in a branch passage branching between the on board charger 6 and the valve E in the cooling water flow passage 11. When the cooling water flow passage 11 described in the description of the valve F is the main stream, the branch passage in which the valve G is disposed is a cooling-down flow passage that branches from the main stream between the on board charger 6 and the valve E and joins the main stream between the valve D and the pump C.

Next, a flow rate control function achieved by the controller 31 according to the embodiment will be described. In the embodiment, instead of the open and close control of the valve A and the valve B by the controller 21 according to the first embodiment, the controller 31 controls operations of the pump B and the pump C, and controls opening and closing of the valve C to the valve G. For example, the controller 31 controls the operations of the pump B and the pump C and controls opening and closing of the valve C to the valve G, and thus, reduces the flow rate of the cooling water to the driving battery 1 compared with the case where the temperature of the driving battery 1 is lower than the temperature of the cooling water when the temperature of the driving battery 1 is higher than the temperature of the cooling water to be transmitted to the driving battery 1 while the ripple charging and discharging is executed. In other words, the flow rate control function achieved by the controller 21 according to the first embodiment can be achieved by the controller 31 by controlling the operations of the pump B and the pump C and controlling opening and closing of the valve C to the valve G.

In the embodiment, the controller 31 controls the flow rate of the cooling water that exchanges heat with the on board charger 6 corresponding to a charging method of the power feeding facility. When the driving battery 1 is charged by the rapid charging method, the driving battery 1 is charged from the power feeding facility with the on board charger 6 being stopped. The controller 31 controls the operations of the pump B and the pump C, and controls opening and closing of the valve C to the valve G such that the on board charger 6 and the cooling water do not exchange heat when the driving battery 1 is charged from the power feeding facility by the rapid charging method. On the other hand, when the driving battery 1 is charged by the normal charging method, the driving battery 1 is charged from the power feeding facility with the on board charger 6 operating. The controller 31 controls the operations of the pump B and the pump C, and controls opening and closing of the valve C to the valve G such that the on board charger 6 and the cooling water exchange heat when the driving battery 1 is charged from the power feeding facility by the normal charging method.

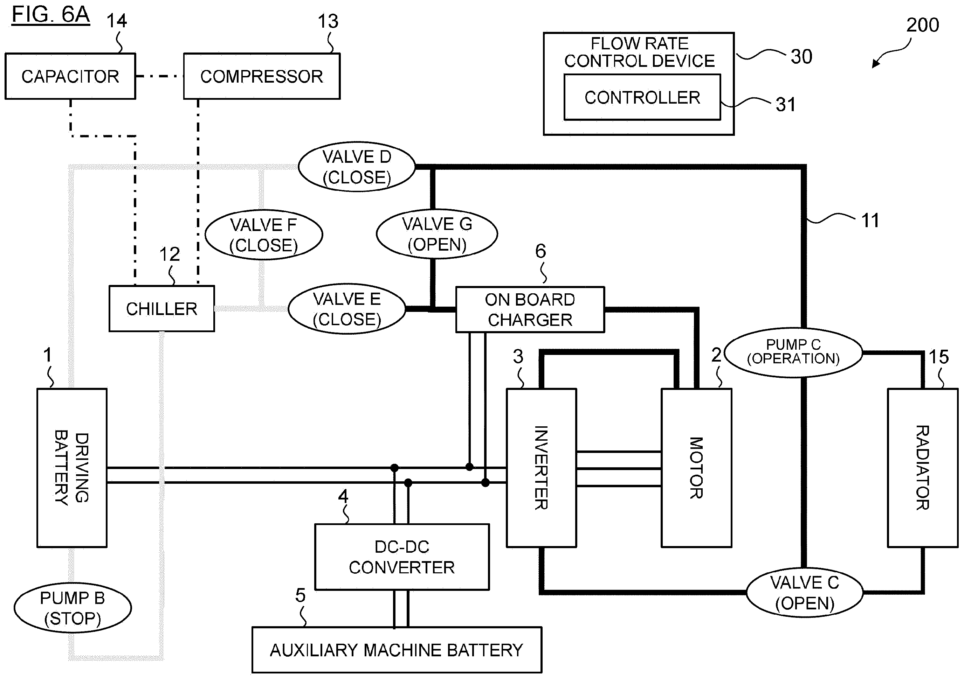

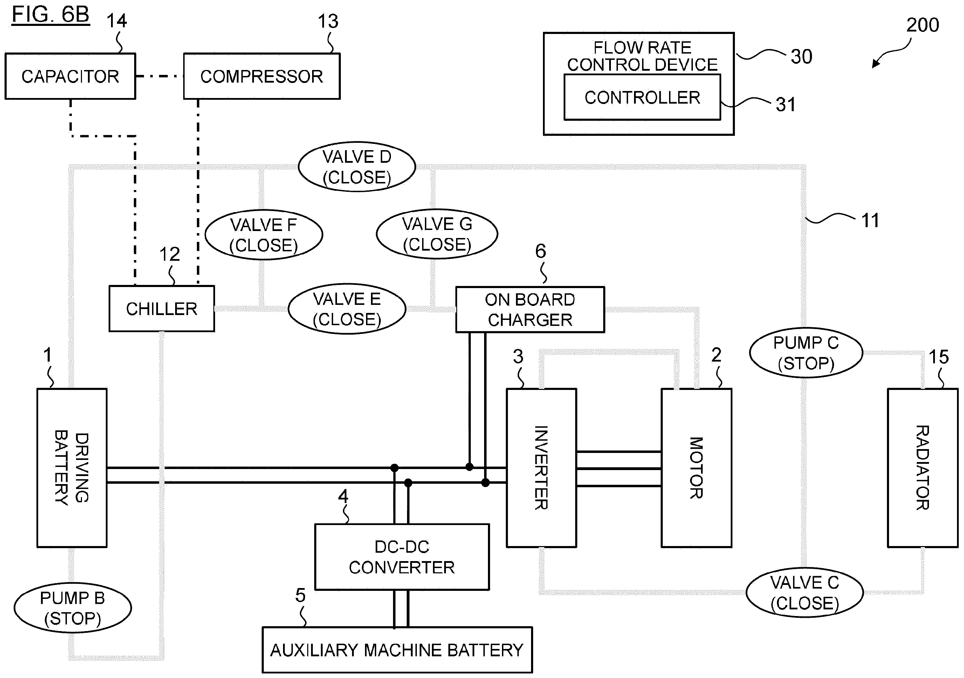

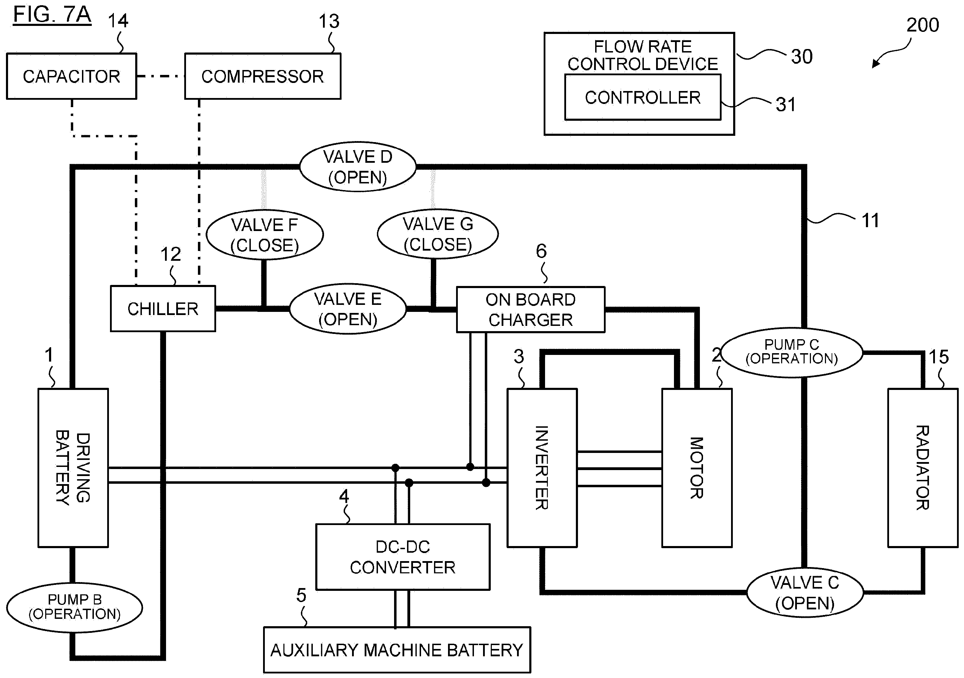

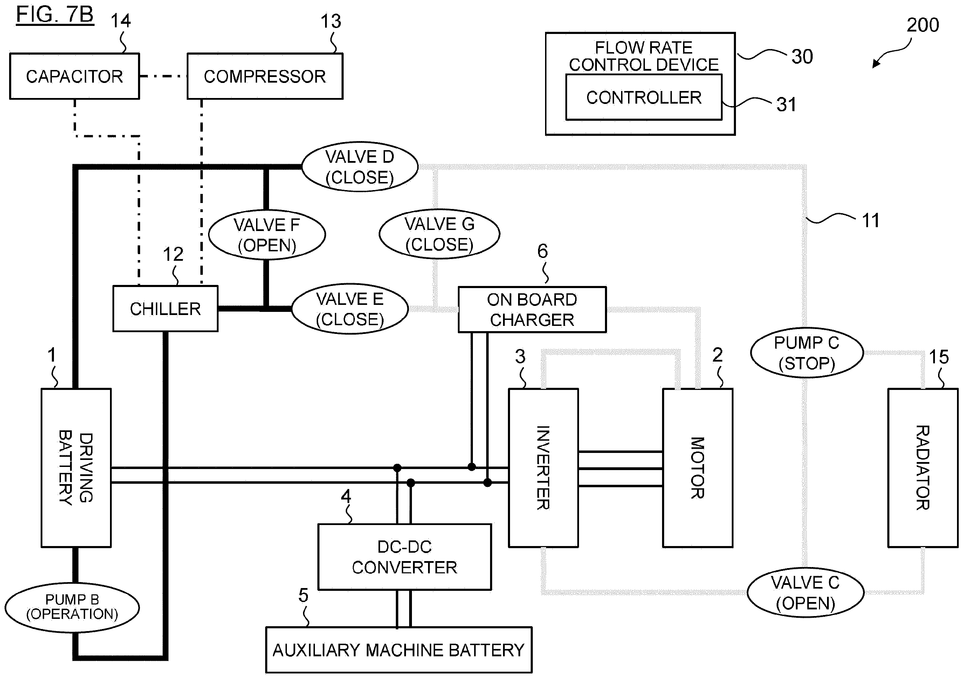

Next, with reference to FIG. 6 and FIG. 7, a flow rate control method of the cooling water according to the embodiment will be described.

FIG. 6A is a drawing illustrating a state where the cooling water does not flow in the driving battery 1 in a situation where the driving battery 1 is charged by the normal charging method in the cooling system 200 illustrated in FIG. 5. When the pump B is stopped, the pump C is operated, the valve D to the valve F are closed, and the valve G is opened by the controller 31, as illustrated in FIG. 6A, the cooling water sent out of the pump C circulates in the cooling water flow passage 11 in the order from the inverter 3, the motor 2, the on board charger 6, and the pump C after being cooled down by the radiator 15. On the other hand, stopping the pump B causes no cooling water to be transmitted to the driving battery 1, and thus, no cooling water flows in the driving battery 1. The cooling water flows in the on board charger 6 in a state where the on board charger 6 operates by charging by the normal charging method.

FIG. 6B is a drawing illustrating a state where the cooling water does not flow in the driving battery 1 in a situation where the driving battery 1 is not charged from the power feeding facility in the cooling system 200 illustrated in FIG. 5. As soon as the pump B and the pump C are stopped and the valve D to the valve G are closed by the controller 31, as illustrated in FIG. 6B, no cooling water flows in the cooling water flow passage 11. For example, as in Time to to Time t₁ illustrated in FIG. 2, when the temperature of the driving battery 1 is higher than the temperature of the cooling water before heat exchange with the driving battery 1 while the ripple charging and discharging is executed, the controller 31 outputs the control signals for stopping the pump B and the pump C to the pump B and the pump C, and outputs the control signals for closing the valve D to the valve G to the valve D to the valve G.

FIG. 7A is a drawing illustrating a state where the cooling water flows in the driving battery 1 in a situation where the driving battery 1 is charged in the normal charging method in the cooling system 200 illustrated in FIG. 5. As soon as the pump B and the pump C are operated, and the valve F, and the valve G are closed and the valve D and the valve E are opened by the controller 31, as illustrated in FIG. 7A, the cooling water sent out of the pump C is, after being cooled down by the radiator 15, transmitted to the inverter 3, the motor 2, the on board charger 6, and the pump B. The cooling water sent out of the pump B is transmitted to the driving battery 1 and the pump C. By the operation of the pump B, the cooling water is transmitted to the driving battery 1, and the cooling water flows in the driving battery 1. In the state where the on board charger 6 is operated by charging by the normal charging method, the cooling water flows in the on board charger 6. The cooling water circulates in the cooling water flow passage 11 in the order from the inverter 3, the motor 2, the on board charger 6, the driving battery 1, and the inverter 3.

FIG. 7B is a drawing illustrating a state where the cooling water flows in the driving battery 1 in a situation where the driving battery 1 is not charged from the power feeding facility in the cooling system 200 illustrated in FIG. 5. As soon as the pump B is operated and the pump C is stopped, and the valve D, the valve E, and the valve G are closed and the valve F is opened by the controller 31, as illustrated in FIG. 7B, the cooling water sent out of the pump B circulates in the cooling water flow passage 11 in the order from the driving battery 1, the valve F, the chiller 12, and the pump B. For example, as in Time t₁ to Time t₂ illustrated in FIG. 2, when the temperature of the driving battery 1 is lower than the temperature of the cooling water before heat exchange with the driving battery 1 while the ripple charging and discharging is executed, the controller 31 outputs the control signal for operating the pump B to the pump B, and outputs the control signal for stopping the pump C to the pump C. The controller 31 outputs the control signals for closing the valve D, the valve E, and the valve G to the valve D, the valve E, and the valve G, and outputs the control signal for opening the valve F to the valve F.

As described above, in the embodiment, the electric vehicle includes the on board charger 6 for charging the driving battery 1 from outside of the electric vehicle by the normal charging method. The cooling water flow passage 11 is a flow passage through which the cooling water that exchanges heat with the driving battery 1, the cooling water that exchanges heat with the inverter 3, the cooling water that exchanges heat with the motor 2, and the cooling water that exchanges heat with the on board charger 6 are allowed to circulate. The controller 31 controls the operations of the pump B and the pump C, and controls opening and closing of the valve C to the valve G such that the on board charger 6 and the cooling water do not exchange heat, when the driving battery 1 is charged from outside of the electric vehicle by the rapid charging method. Since the on board charger 6 is not operated with charging by the rapid charging method, heat exchange with the on board charger 6 that does not generate heat or is less likely to generate heat is prevented, and the heat dissipation amount from the motor 2 and the inverter 3 to the cooling water can be increased. As the result, compared with the case where the cooling water flows in the on board charger 6, cooling down of the motor 2 and the inverter 3 can be accelerated.

In the embodiment, the controller 31 controls the operations of the pump B and the pump C, and controls opening and closing of the valve C to the valve G such that the on board charger 6 and the cooling water exchange heat when the driving battery 1 is charged from outside of the electric vehicle by the normal charging method. Even when the on board charger 6 generates heat due to charging by the normal charging method, the on board charger 6 can be cooled down.

A modification of the controller 31 will be described in the case where the driving battery 1 is charged by a rapid charging method. The controller 31 according to the modification, when charging of the driving battery 1 from outside of the electric vehicle by the rapid charging method is started, outputs a control signal for stopping the charging of the driving battery 1 to a power feeding facility via a predetermined communication line after a predetermined period has passed. After the charging of the driving battery 1 by the rapid charging method is stopped, the controller 31 generates a control signal for ripple charging and discharging and outputs it to the inverter 3. When the temperature of the driving battery 1 is raised by ripple charging and discharging for a certain period, the controller 31 stops outputting the control signal for ripple charging and discharging, and outputs a control signal for resuming the charging of the driving battery 1 by the rapid charging method to the power feeding facility. By the control by the controller 31 according to the modification, in the driving battery 1, after the rapid charging is performed, the ripple charging and discharging is performed, and then, the rapid charging is resumed. Since the driving battery 1 generates heat by the rapid charging and the ripple charging and discharging, the heat generation amount can be increased compared with the case where only the rapid charging is performed without the ripple charging and discharging interposed between the rapid charging. As the result, more efficient warming-up of the driving battery 1 is achievable.

Note that the embodiments and modification described above are described for ease of understanding the present invention, and not described for limiting the present invention. Accordingly, each of the components disclosed in the above-described embodiments has the gist even including all the design changes and equivalents falling within the technical scope of the present invention.

For example, while the description has been made with the electric vehicle being used as an example of the electric-powered vehicle in the above-described embodiments, the flow rate control method, the flow rate control device, and the cooling system according to the present invention are also applicable to other electric-powered vehicles. For example, the electric-powered vehicle may be what is called a series hybrid vehicle on which an engine as an electric generator, a motor for electric generation, and a motor that generates a driving force that drives the electric-powered vehicle by an electric power from an electric generator or a driving battery are mounted. For example, the electric-powered vehicle may be what is called a series parallel vehicle.

For example, while in the embodiments described above, the description has been made with the cooling water being used as an example of the heating medium exchanging heat with a cooling target, the heating medium is only necessary to be a fluid coolant, and may, for example, be a coolant gas. In this case, the cooling system according to the present invention has a coolant gas flow passage as a passage for the coolant gas, instead of the cooling water flow passage. The coolant gas can also obtain an effect equal to the case with the cooling water. The heating medium according to the present invention includes the cooling water or the coolant gas.

For example, in the embodiments described above, the description has been made by using the configuration of not flowing the cooling water in the driving battery 1 when the temperature of the driving battery 1 is higher than the temperature of the cooling water before heat exchange with the driving battery 1 while the ripple charging and discharging is executed as an example, the configuration is not limited to this. When the temperature of the driving battery 1 is higher than the temperature of the cooling water before heat exchange with the driving battery 1 while the ripple charging and discharging is executed, the cooling water flowing in the driving battery is only necessary to be less than the case where the temperature of the driving battery 1 is lower than the temperature of the cooling water before heat exchange with the driving battery 1. For example, in the cooling system 100 in FIG. 1, the controller 21 may output the control signal that can adjust a movable mechanism (valve element) configuring the valve A to the valve A. This allows obtaining an effect equal to the effects in the above-described embodiments.

For example, while in the above-described embodiments, the description has been made by using the method using the carrier wave having the phases corresponding to the respective phases of the motor 2 as an example of the generation method for the control signal for ripple charging and discharging, the controller 21 may generate the control signal for ripple charging and discharging based on a conventionally known method, that is, the comparison between the same carrier waves with no phase differences and the alternating-current voltage command value.

For example, while in the above-described embodiments, the description has been made by using the parking lock mechanism as an example of the mechanism making the output shaft unrotatable, it may be a parking brake mechanism or a foot braking mechanism, which is conventionally known, or a plurality of these mechanisms may be used in combination.

### Description of Reference Numerals

- 1: Driving battery
- 2: Motor
- 3: Inverter
- 4: DC-DC converter
- 5: Auxiliary machine battery
- 6: On board charger
- 11: Cooling water flow passage
- 12: Chiller
- 13: Compressor
- 14: Capacitor
- 15: Radiator
- 20: Flow rate control device
- 21: Controller
- 100: Cooling system

## Claims

1. A flow rate control method executed by a controller of a vehicle on which a motor that drives the vehicle, a battery that allows supplying an electric power to the motor, and a power conversion device disposed between the motor and the battery are mounted, the flow rate control method controlling a flow rate of a heating medium that exchanges heat with the battery, the flow rate control method comprising:
outputting an execution command of ripple charging and discharging that alternately charges and discharges for multiple times with the battery to the power conversion device when a temperature of the battery is lower than a predetermined threshold temperature; and
reducing the flow rate of the heating medium compared with a case where the temperature of the battery is lower than the temperature of the heating medium when the temperature of the battery is higher than the temperature of the heating medium that exchanges heat with the battery while the ripple charging and discharging is executed.

2. The flow rate control method according to claim 1, wherein
the vehicle has a flow passage through which the heating medium is allowed to circulate, and a valve and a pump disposed in the flow passage, and
controlling an operation of at least any one of the valve and the pump reduces the flow rate of the heating medium compared with a case where a temperature of the battery is lower than a temperature of the heating medium when the temperature of the battery is higher than the temperature of the heating medium while the ripple charging and discharging is executed.

3. The flow rate control method according to claim 2, wherein
the heating medium is a first heating medium,
the flow passage is a flow passage through which the first heating medium, a second heating medium that exchanges heat with the power conversion device, and a third heating medium that exchanges heat with the motor are allowed to circulate, and
an operation of at least any one of the valve and the pump is controlled such that the power conversion device and the second heating medium exchange heat and the motor and the third heating medium exchange heat while the ripple charging and discharging is executed.

4. The flow rate control method according to claim 3, wherein
an operation of at least any one of the valve and the pump is controlled such that any of the frow rates of the flow rate of the second heating medium and the flow rate of the third heating medium or a sum of the flow rate of the second heating medium and the flow rate of the third heating medium is increased more than the flow rate of the first heating medium when the temperature of the battery is higher than the temperature of the first heating medium.

5. The flow rate control method according to claim 3 or 4, wherein
an operation of at least any one of the valve and the pump is controlled such that the second heating medium that has received heat generated from the power conversion device and the third heating medium that has received heat generated from the motor exchange heat with the battery when the temperature of the battery is lower than the temperature of the first heating medium.

6. The flow rate control method according to claim 5, wherein
an operation of at least any one of the valve and the pump is controlled such that the first heating medium, the second heating medium, and the third heating medium circulate in the flow passage when the temperature of the battery is lower than the temperature of the first heating medium.

7. The flow rate control method according to any one of claims 3 to 6, wherein
the vehicle includes an on board charger for charging the battery from outside the vehicle by a normal charging method and a fourth heating medium that exchanges heat with the on board charger,
the flow passage is a flow passage through which the first heating medium, the second heating medium, the third heating medium, and the fourth heating medium are allowed to circulate, and
an operation of at least any one of the valve and the pump is controlled such that the on board charger and the fourth heating medium do not exchange heat when the battery is charged from outside the vehicle by a rapid charging method.

8. The flow rate control method according to claim 7, wherein an operation of at least any one of the valve and the pump is controlled such that the on board charger and the fourth heating medium exchange heat when the battery is charged from outside the vehicle by the normal charging method.

9. The flow rate control method according to claim 7, wherein
an execution command of the ripple charging and discharging is output to the power conversion device after charging of the battery by the rapid charging method is stopped, and
a charging control of the battery by the rapid charging method is resumed after the ripple charging and discharging is stopped.

10. The flow rate control method according to any one of claims 1 to 9, wherein
an execution command of the ripple charging and discharging is output in a state where the vehicle is stopped by a mechanism that makes an output shaft unrotatable.

11. The flow rate control method according to claim 10, wherein
the mechanism that makes the output shaft unrotatable includes any of a parking lock mechanism, a parking brake mechanism, and a foot brake mechanism.

12. The flow rate control method according to any one of claims 1 to 11, wherein
the heating medium includes a cooling water or a coolant gas.

13. A flow rate control device comprising:
a controller of a vehicle on which a motor that drives a vehicle, a battery that allows supplying an electric power to the motor, and a power conversion device disposed between the motor and the battery are mounted, wherein
the controller:
outputs an execution command of ripple charging and discharging that alternately charge and discharge for multiple times with the battery to the power conversion device when a temperature of the battery is lower than a predetermined threshold temperature, and
a flow rate of the heating medium is controlled such that the flow rate of the heating medium is reduced compared with the case where the temperature of the battery is lower than the temperature of the heating medium when the temperature of the battery is higher than the temperature of the heating medium that exchanges heat with the battery while the ripple charging and discharging is executed.

14. A cooling system comprising:
the flow rate control device according to claim 13, the motor, the battery, the power conversion device, and a flow passage through which the heating medium is allowed to circulate.
